# FASCICULE DE BREVET EUROPEEN

(11) **EP 2 212 736 B1**
(45) Date de publication et mention de la délivrance du brevet: **21.08.2013**
(21) Numéro de dépôt: 08839363.2
(22) Date de dépôt: 26.09.2008
(51) Int. Cl.: G02B 27/01, G05D 1/06, G01C 23/00, B64D 43/02

(54) **DISPOSITIF DE SURVEILLANCE CROISÉE POUR AFFICHEURS DITS TÊTE HAUTE**
ÜBERKREUZTE ÜBERWACHUNGSEINRICHTUNG FÜR HEAD-UP-DISPLAYS
CROSSED MONITORING DEVICE FOR HEAD-UP DISPLAYS

(30) Priorité: 12.10.2007 FR 0758286
(43) Date de publication de la demande: 04.08.2010
(73) Titulaire: AIRBUS OPERATIONS, 31060 Toulouse (FR)
(72) Inventeur: COLOMA, Laurent, F-31000 Toulouse (FR); BIDEAU, David, F-31000 Toulouse (FR)
(74) Mandataire: Imbert de Tremiolles, Ghislain
(86) Numéro de dépôt international: PCT/FR2008/051735
(87) Numéro de publication internationale: WO 2009/050393

(56) Documents cités:
- WO-A-2004/037643
- FR-A- 2 892 092
- US-A- 3 557 470
- US-A- 5 808 563
- US-A- 6 154 151
- US-A1- 2006 066 459
- US-A1- 2007 198 141
- US-A1- 2007 218 428

## Description

La présente invention concerne l'affichage d'informations sur les dispositifs d'affichage dits tête haute et plus particulièrement un dispositif de surveillance croisée pour ce type d'afficheurs permettant, notamment, à un pilote, dans un aéronef, de visualiser, via son afficheur, les informations présentées sur l'afficheur du pilote assis à ses côtés.

Les cockpits d'aéronefs ne sont généralement pas équipés de dispositifs de visualisation dits tête haute, aussi appelé HUD (sigle de *Head Up Display* en terminologie anglo-saxonne), mais sont équipés d'écrans conventionnels, cathodiques ou plats, installés dans les planches de bord. Ces écrans conventionnels possèdent en général des angles de vue suffisamment larges pour permettre à un pilote assis en place gauche d'accéder visuellement à toutes les informations affichées sur les écrans de droite et inversement.

Par conséquent, dans un cockpit traditionnel, il est possible pour un pilote d'accéder à l'intégralité des informations présentées sur les différents écrans. C'est notamment fondamental sur l'écran primaire de pilotage, appelé PFD (sigle de *Primary Flight Display* en terminologie anglo-saxonne) où les pilotes ont couramment besoin de vérifier la validité de leurs paramètres primaires de vol tels que l'attitude et la vitesse. En effet, sur les écrans de gauche sont présentés des paramètres issus d'un premier ensemble de senseurs et, sur les écrans de droite, des paramètres issus d'un second ensemble de senseurs. Cette ségrégation permet à un pilote de surveiller ses propres paramètres de manière indépendante.

Sur un dispositif de visualisation tête haute, la problématique est différente dans la mesure où les informations projetées sur l'écran HUD ne sont observables que dans un volume limité de l'espace appelé boîte à oeil (*eyebox* en terminologie anglo-saxonne). Cette boîte à oeil, de dimensions restreintes, est centrée autour de l'oeil du pilote. Elle permet, sur certains aéronefs tels que les avions militaires, l'utilisation de jumelles de vision nocturne.

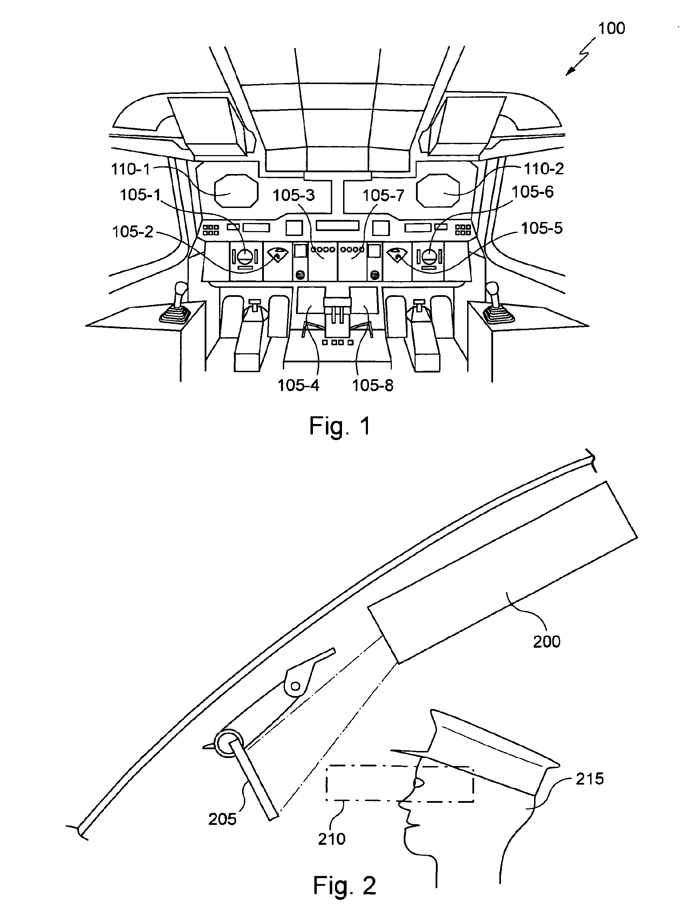

La figure 1 représente un cockpit d'aéronef 100 comprenant huit écrans tête basse, référencés 105-1 à 105-8, et deux écrans tête haute, référencés 110-1 et 110-2. Ainsi, le pilote de gauche peut visualiser des informations affichées sur les écrans situés devant lui, c'est-à-dire ici sur les écrans 105-1 à 105-4 et 110-1, ainsi que sur les écrans tête basse situés devant le pilote situé à droite, c'est-à-dire ici sur les écrans 105-5 à 105-8. De même, le pilote de droite peut visualiser des informations affichées sur les écrans 105-5 à 105-8 et 110-2, ainsi que sur les écrans tête basse 105-1 à 105-4.

La figure 2 illustre le principe d'un écran tête haute comprenant un projecteur 200 et un écran au moins partiellement transparent 205 sur lequel sont projetées les informations à afficher. La référence 210 schématise une boîte à oeil dans laquelle doivent se situer les yeux d'un utilisateur 215 pour que celui-ci puisse visualiser les informations projetées par le projecteur 200 sur l'écran 205.

En se basant sur l'état des paramètres disponibles sur les bus de communication auquel est relié le système de visualisation tête haute et en tenant compte des sélections manuelles du pilote, un calculateur, appelé HUDC (sigle de *Head-Up Display Computer* en terminologie anglo-saxonne), génère une image vidéo numérique qui est ensuite transmise au projecteur, appelé HPU (sigle de *Head-Up Projection Unit* en terminologie anglo-saxonne) pour affichage. L'image vidéo numérique projetée est généralement générée à partir de données issues de senseurs et de symboles graphiques formant une symbologie représentée par l'image vidéo numérique.

Vue de côté, comme illustré sur la figure 2, une boite à oeil a approximativement une longueur d'environ 10 cm. Il n'est donc pas possible pour un pilote d'accéder directement aux informations présentées dans le HUD de son voisin.

Ce problème est crucial pour des aéronefs dans lesquels les HUDs sont utilisés comme instrument primaire de pilotage, c'est-à-dire les aéronefs dans lesquels les pilotes ont la possibilité de ne pas afficher de PFD sur les écrans tête basse.

Comme décrit précédemment, chaque HUD construit son image en se basant sur une sélection de données. En pratique, certaines informations relatives à un premier ensemble de senseurs peuvent être sélectionnées pour être affichées sur un premier HUD. De même, certaines informations relatives à un second ensemble de senseurs peuvent être sélectionnées pour être affichées sur un second HUD. Par conséquent, chaque HUD a sa propre fonction de sélection de sources qui est dépendante du côté où est installé le HUD.

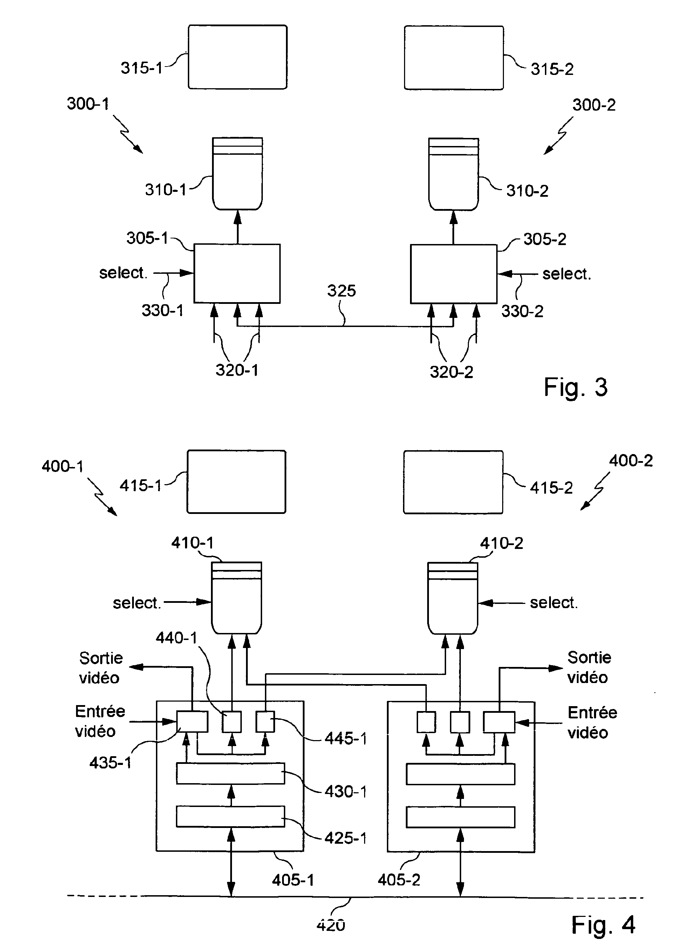

Selon une solution connue, représentée sur la figure 3, un bus croisé de communication est établi entre les différents HUDs pour leur permettre d'échanger les informations sélectionnées relatives aux différents ensembles de senseurs.

Sur une commande du pilote, via un bouton dédié à la surveillance croisée et accessible sur un panneau de contrôle, le HUD utilise les informations sélectionnées, issues de senseurs associés à un autre HUD, pour générer une image basée sur les mêmes informations que celles visualisées sur un autre HUD.

La figure 3 illustre cette solution lorsque deux HUDs sont utilisés. Le premier HUD, référencé 300-1, comprend un calculateur 305-1, un projecteur 310-1 et un écran de projection 315-1.

Le calculateur 305-1 reçoit des informations d'un groupe de senseurs réparti en deux sous-groupes correspondants, par exemple, à un sous-groupe droit et un sous-groupe gauche, via des bus de communication 320-1. Une partie de ces informations est sélectionnée par le pilote pour être affichée. Les informations sélectionnées sont utilisées pour former une image qui est transmise au projecteur 310-1 pour être projetée sur l'écran 315-1.

De même, le second HUD, référencé 300-2, comprend un calculateur 305-2, un projecteur 310-2 et un écran de projection 315-2. Les informations sélectionnées, issues des bus de communication 320-2, sont utilisées pour former une image, transmise au projecteur 310-2 et projetée sur l'écran 315-2.

Un bus de communication 325 relie les calculateurs 305-1 et 305-2 de telle sorte que les données sélectionnées dans le calculateur 305-1 sont transmises au calculateur 305-2 et que, réciproquement, les données sélectionnées dans le calculateur 305-2 sont transmises au calculateur 305-1.

Les calculateurs 305-1 et 305-2 comprennent en outre des commandes 330-1 et 330-2, respectivement, qui permettent de déterminer quelles sont les informations sélectionnées qui doivent être affichées. Selon un mode de fonctionnement courant, les informations sélectionnées issues de l'ensemble des senseurs associés au HUD considéré sont affichées tandis que dans un mode de surveillance croisées, les informations sélectionnées issues de l'ensemble des senseurs associés à l'autre HUD sont affichées.

Selon cette méthode, il est donc nécessaire de gérer la sélection des sources de données, de gérer un bus de communication entre les calculateurs utilisés et d'acquérir les données issues de plusieurs ensembles de senseurs.

Bien que cette solution permette une surveillance croisée des informations affichées dans les HUDs, elle présente plusieurs inconvénients, notamment en terme de ségrégation des données et en terme de fiabilité. Le document US 00 6154 151 A divulgue un système de surveillance croisée pour aévonects, basé sur l'échange de données.

L'invention permet de résoudre au moins un des problèmes exposés précédemment.

L'invention a ainsi pour objet un dispositif de surveillance croisée, tel que défini dans la revendication 1, pour un afficheur dit tête haute permettant la visualisation d'une représentation d'au moins une première donnée, ce dispositif comprenant les moyens suivants,
- moyens pour générer au moins une image à partir de ladite au moins une première donnée, appelée première image ;
- moyens pour recevoir d'au moins un second afficheur au moins une image générée à partir d'au moins une seconde donnée, appelée au moins une seconde image ; et,
- moyens pour sélectionner l'une desdites première et au moins une seconde images.

L'invention permet ainsi de réaliser une surveillance croisée en utilisant le HUD, c'est-à-dire en permettant au pilote d'accéder directement et sans se déplacer aux informations affichées sur un second HUD, de façon fiable et sans porter atteinte à la ségrégation des données. Des modes de réalisation additionels sont définis dans les revendications dépendantes.

De façon avantageuse, le dispositif comprend en outre des moyens pour modifier ladite première image selon les caractéristiques dudit premier afficheur pour tenir compte de la distorsion engendrée par l'affichage de ladite première image par ledit premier afficheur.

Le dispositif comprend en outre, de préférence, des moyens pour transmettre ladite première image audit au moins un second afficheur pour permettre audit second afficheur d'afficher ladite première image.

Selon un mode de réalisation particulier, le dispositif comprend en outre des moyens pour modifier ladite première image selon les caractéristiques dudit au moins un second afficheur pour tenir compte de la distorsion engendrée par l'affichage de ladite première image par ledit au moins un second afficheur.

Le dispositif comprend en outre avantageusement des moyens pour recevoir lesdites caractéristiques dudit au moins un second afficheur permettant de déterminer les modifications devant être apportées à ladite première image pour tenir compte de la distorsion engendrée par l'affichage de ladite première image par ledit au moins un second afficheur.

Toujours selon un mode de réalisation particulier, le dispositif comprend en outre des moyens pour modifier ladite au moins une seconde image selon les caractéristiques dudit premier afficheur afin de prendre en compte la distorsion engendrée par l'affichage de ladite seconde image par ledit premier afficheur.

De façon avantageuse, le dispositif comprend en outre les moyens suivants,
- moyens pour recevoir au moins une image d'une source extérieure, appelée troisième image ; et,
- moyens pour combiner lesdites première et troisième images.

Le dispositif selon l'invention permet ainsi d'ajouter certaines informations contenues dans la première image concernant, par exemple, des paramètres de vol, à la troisième image provenant, par exemple, d'un dispositif de type EVS ou SVS.

Toujours selon un mode de réalisation particulier, le dispositif comprend en outre des moyens pour recevoir un signal de synchronisation externe indépendant, utilisé pour l'affichage des images.

Le dispositif comprend en outre, de préférence, des moyens pour insérer dans ladite au moins une seconde image une indication selon laquelle ladite au moins une seconde image est issue dudit au moins un second afficheur afin de donner une indication sur la source des informations visualisées.

L'invention a également pour objet un aéronef comprenant le dispositif tel que décrit précédemment.

D'autres avantages, buts et caractéristiques de la présente invention ressortent de la description détaillée qui suit, faite à titre d'exemple non limitatif, au regard des dessins annexés dans lesquels :
- la figure 1 représente un cockpit d'aéronef comprenant huit écrans dits tête basse et deux écrans dits tête haute ;
- la figure 2 illustre le principe d'un écran tête haute ;
- la figure 3 illustre une solution connue pour la surveillance croisée lorsque deux HUDs sont utilisés ;
- la figure 4 illustre un exemple de mise en oeuvre de l'invention selon un premier mode de réalisation lorsque deux HUDs sont utilisés ;
- la figure 5 illustre un exemple de mise en oeuvre de l'invention selon un second mode de réalisation lorsque deux HUDs sont utilisés ;
- la figure 6 illustre une vue détaillée d'un module de mixage et de contrôle tel que représenté sur la figure 5 ;
- la figure 7 représente un exemple d'emplacement d'un bouton d'activation du mode de surveillance croisée sur un panneau de contrôle ; et,
- la figure 8, comprenant les figures 8a et 8b, illustre l'utilisation de la fonction de surveillance croisée.

Le principe général de l'invention consiste, pour un calculateur d'un premier HUD, à acquérir une image générée par un calculateur d'un second HUD pour être affiché par le projecteur de ce second HUD et, suite à une commande d'activation du pilote, à l'afficher sur le projecteur du premier HUD, c'est-à-dire du HUD associé à la commande d'activation de surveillance croisée.

Selon un premier mode de réalisation, une ou plusieurs images sont créées par chaque calculateur, en dupliquant l'image générée par celui-ci, de telle sorte qu'une image soit transmise à chaque projecteur. La sélection de l'image à afficher se fait au niveau du projecteur, qui reçoit plusieurs images, selon une commande de sélection, par exemple à l'aide d'un bouton spécifique de surveillance croisée pouvant être situé sur le panneau de contrôle. La commande de sélection agit comme un sélecteur de source vidéo.

En d'autres termes, dans un aéronef comprenant deux HUDs, la solution consiste ici à récupérer l'image générée par le calculateur opposé pour l'afficher, suite à une commande du pilote, sur le HUD d'où la demande de surveillance croisée a été émise.

Du fait de la distorsion engendrée par la projection des images, une fonction de correction de distorsion est avantageusement appliquée, au niveau du calculateur, aux images créées. En particulier, comme illustré sur la figure 2, l'axe du projecteur 200 n'étant pas perpendiculaire à l'écran de projection 205, il en résulte une déformation de l'image projetée. Cependant, en raison des spécificités de chaque ensemble projecteur/écran, les fonctions de correction de distorsion appliquées sur les images créées sont différentes les unes des autres et sont différentes de la fonction de correction de distorsion appliquée sur l'image générée.

La figure 4 illustre un exemple de mise en oeuvre de l'invention selon ce premier mode de réalisation lorsque deux HUDs sont utilisés. Comme dans l'exemple illustré sur la figure 3, les HUDs, référencés 400-1 et 400-2, comprennent chacun un calculateur 405-1 et 405-2, un projecteur 410-1 et 410-2 et un écran de projection 415-1 et 415-2, respectivement.

Un bus de données 420 permet aux calculateurs 405-1 et 405-2 d'accéder aux données issues de chaque ensemble de senseurs.

Le calculateur 405-1 comprend un module 425-1 d'entrée/sortie permettant notamment d'accéder aux données transportées par le bus 420. Les données sélectionnées et accédées par le module 425-1 d'entrée/sortie sont transmises à un module 430-1 de traitement. Le traitement permet de transformer les données accédées sous forme d'images, de préférence des images à deux niveaux. A titre d'illustration, un niveau peut représenter les zones transparentes où rien n'est affiché tandis qu'un second niveau est lié à la représentation des données. Cependant, la nature du traitement, liée, en particulier, à la nature des données à afficher, sort du cadre de l'invention et ne sera pas abordée ici. Les images créées par le module 430-1 sont transmises, sous forme de flux vidéo, au module 435-1 de mixage où elles peuvent être intégrées à un flux vidéo issu d'une source externe. La source externe est, par exemple, un senseur infrarouge de type EVS (sigle de *Enhanced Vision System* en terminologie anglo-saxonne).

Le module 435-1 génère un flux vidéo en additionnant, si nécessaire, pixel (acronyme de *picture element* en terminologie anglo-saxonne) à pixel, les images créées dans le module 430-1 aux images du flux vidéo issu d'une source externe. Si le flux vidéo issu d'une source externe ne doit pas être pris en compte, le flux vidéo généré correspond au flux vidéo créé par le module 430-1. Ce flux vidéo généré est transmis aux modules 440-1 et 445-1 de calcul de correction de distorsion. Le flux vidéo généré peut également être acheminé vers une sortie du calculateur 405-1 pour être affiché, par exemple, sur un écran tête basse.

Les modules 440-1 et 445-1 de calcul de correction de distorsion transforment le flux vidéo issu du module 435-1 de mixage pour l'adapter aux projecteurs 410-1 et 410-2, respectivement. Il est ici nécessaire d'utiliser autant de modules de calcul de correction de distorsion qu'il y a de projecteurs vers lesquels est transmis le flux vidéo.

Lorsque le flux vidéo a été adapté à chacun des ensembles projecteur/écran, il est transmis à chaque projecteur. Ici, le flux vidéo issu du module 440-1 est transmis au projecteur 410-1 tandis que le flux vidéo issu du module 445-1 est transmis au projecteur 410-2.

Les calculateurs 405-1 et 405-2 sont ici similaires et comprennent les mêmes modules.

Le projecteur 410-1 reçoit un premier flux vidéo issu du calculateur 405-1 et un second flux vidéo issu du calculateur 405-2. Le flux vidéo projeté est défini par l'état d'une commande de sélection.

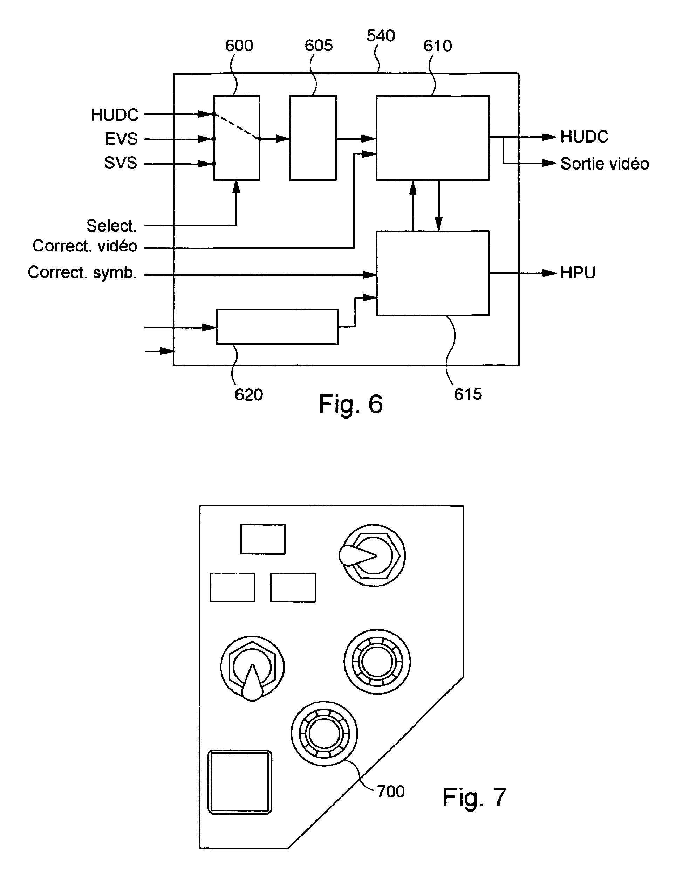

Le mode de surveillance croisée n'étant, de préférence, que temporairement utilisé (il n'est en principe utilisé par le pilote qu'en cas de doute sur la validité ou la valeur d'un paramètre présenté), il n'est a priori pas acceptable de l'activer en permanence (les informations d'un seul ensemble de senseurs seraient affichées sur les deux côtés du cockpit). Les commandes de sélection sont donc avantageusement issues d'un contrôle monostable activable uniquement sur appui, c'est-à-dire d'un bouton monostable qu'il est nécessaire de maintenir enfoncé afin d'accéder à la fonction de surveillance croisée. Ce bouton de contrôle est par exemple situé sur un panneau de contrôle comme illustré sur la figure 7.

De même, le projecteur 410-2 reçoit un premier flux vidéo issu du calculateur 405-1 et un second flux vidéo issu du calculateur 405-2. Le flux vidéo projeté est défini par l'état d'une commande de sélection, différente de celle associée au projecteur 410-1.

Les informations affichées lorsque la commande de surveillance croisée est activée sont identiques à celles affichées par le HUD opposé (si celui-ci est en mode normal). Cependant, selon ce premier mode de réalisation, il est nécessaire, pour chaque calculateur, de créer au moins une seconde image et de mettre en oeuvre deux calculs de correction de distorsion distincts, en tenant compte des distorsions induites par les projecteurs concernés (il peut être nécessaire de connecter chaque projecteur à chaque calculateur pour identifier les distorsions). Il est également nécessaire de prévoir au moins deux entrées vidéo par projecteur, ainsi qu'une commande de sélection vidéo.

Un second mode de réalisation consiste à générer, au niveau du calculateur, un flux vidéo identique au flux vidéo dédié au projecteur associé au calculateur, avant calcul de correction de distorsion, et à l'envoyer au calculateur opposé en format numérique via une fibre optique. Ce flux vidéo est acquis par le calculateur opposé comme une entrée vidéo externe, au même titre qu'un flux vidéo issu, par exemple, d'un senseur infrarouge de type EVS. Les corrections de distorsion sont donc effectuées localement par chaque calculateur pour le projecteur associé.

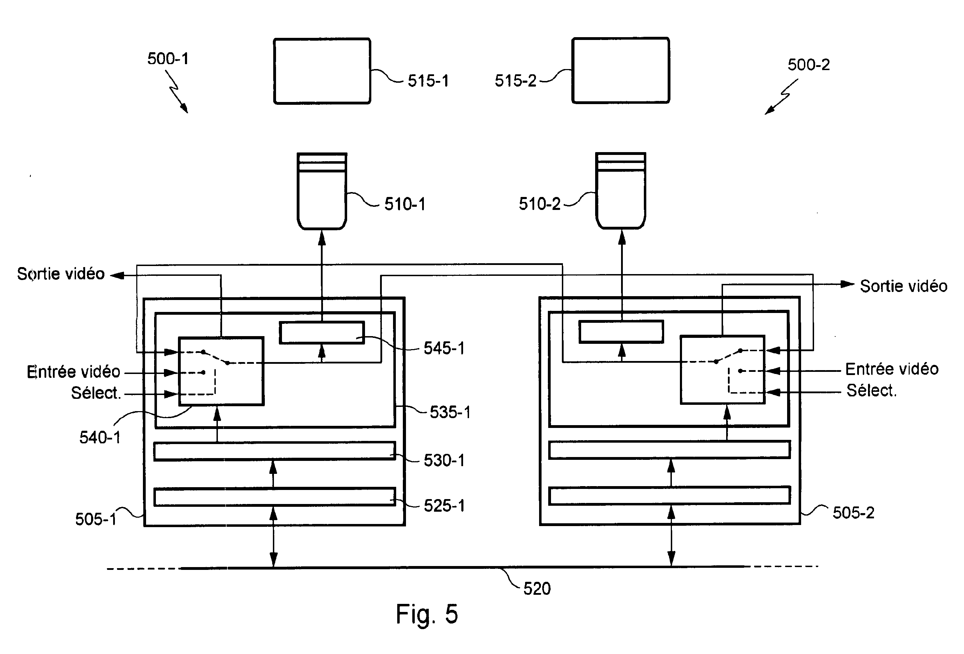

La figure 5 illustre un exemple de mise en oeuvre de l'invention selon ce second mode de réalisation lorsque deux HUDs sont utilisés. Comme dans l'exemple illustré sur les figures 3 et 4, les HUDs, référencés 500-1 et 500-2, comprennent chacun un calculateur 505-1 et 505-2, un projecteur 510-1 et 510-2 et un écran de projection 515-1 et 515-2, respectivement.

Un bus de données 520 permet aux calculateurs 505-1 et 505-2 d'accéder aux données issues de chaque ensemble de senseurs.

Le calculateur 505-1 comprend un module 525-1 d'entrée/sortie permettant notamment d'accéder aux données transportées par le bus 520. Les données sélectionnées et accédées par le module 525-1 d'entrée/sortie sont transmises à un module 530-1 de traitement où elles sont transformées sous forme d'images. Comme indiqué précédemment, la nature du traitement est liée à la nature des données à afficher et ne sera pas abordée ici.

Les images issues du module 530-1 sont transmises à un module de traitement vidéo 535-1 et, plus particulièrement, à un module 540-1 de contrôle et de mixage où elles peuvent être intégrées à un flux vidéo issu d'une source externe, par exemple, un senseur infrarouge de type EVS, ou à un flux vidéo généré par un autre HUD. Le module 540-1 produit un flux vidéo comprenant les images issues du module 530-1 de traitement et, éventuellement, les images du flux vidéo issu d'une autre source.

La sélection de la source externe, c'est-à-dire ici la sélection du flux vidéo issu d'un senseur infrarouge ou la sélection d'un flux vidéo issu d'un autre HUD, est déterminée par l'état d'une commande de sélection qui constitue une entrée du module 540-1.

Comme indiqué précédemment, le mode de surveillance croisée ne doit être utilisé que temporairement (en cas de doute sur la validité ou la valeur d'un paramètre présenté). La commande de sélection est donc avantageusement issues d'un contrôle monostable activable uniquement sur appui, c'est-à-dire d'un bouton monostable qu'il est nécessaire de maintenir enfoncé afin d'accéder à la fonction de surveillance croisée.

Le flux vidéo issu du module 540-1 est transmis au module 545-1 de calcul de correction de distorsion ainsi qu'au calculateur 505-2. Le flux vidéo généré dans le module 540-1, comprenant les images issues du module 530-1 de traitement, peut également être acheminé vers une sortie du calculateur 505-1 pour être affiché, par exemple, sur un écran tête basse.

Le module 545-1 de calcul de correction de distorsion transforme le flux vidéo issu du module 540-1 de mixage et de contrôle pour l'adapter aux caractéristiques du couple formé par le projecteur 510-1 et l'écran 515-1.

Lorsque le flux vidéo a été adapté à ces caractéristiques, il est transmis au projecteur 510-1.

Les calculateurs 505-1 et 505-2 sont ici similaires et comprennent les mêmes modules.

Ainsi, dans un aéronef comprenant deux HUDs, les informations affichées par un HUD, lorsque la commande de surveillance croisée est activée, sont identiques à celles affichées par le HUD opposé (si celui-ci est en mode normal).

Selon ce second mode de réalisation, il n'est pas nécessaire de modifier les projecteurs ni d'intégrer plusieurs modules de calcul de correction de distorsion dans chaque calculateur. Cependant, il est nécessaire, pour chaque calculateur, de générer au moins un second flux vidéo non modifié par un calcul de correction de distorsion, d'accepter en entrée au moins un flux vidéo issu d'un autre HUD et de gérer la sélection d'un flux vidéo parmi au moins deux flux vidéo.

La figure 6 représente une vue détaillée d'un module de mixage et de contrôle tel que le module 540-1 de la figure 5, référencé 540 de façon générique.

Comme illustré, le module 540 comprend ici trois entrées vidéo HUDC, EVS et SVS. L'entrée vidéo HUDC permet d'acquérir les images générées par le calculateur d'un autre HUD. Le module 540 peut comprendre plusieurs entrées HUDC. L'entrée vidéo EVS permet d'acquérir, éventuellement, un flux vidéo issu d'un système de type EVS. L'entrée vidéo SVS permet d'acquérir, éventuellement, un flux vidéo de type SVS (sigle de *Synthetic Vision System* en terminologie anglo-saxonne), c'est-à-dire un flux d'images de synthèse ou un flux d'images de réalité augmentée. Les informations sélectionnées pour être affichées et formant une suite d'images peuvent être ajoutées à n'importe lequel de ces trois flux vidéo.

Les entrées vidéo HUDC, EVS et SVS sont reliées à un commutateur 600, contrôlé par une commande de sélection. La sortie du commutateur 600 correspond au flux vidéo sélectionné.

Le flux vidéo issu du commutateur 600 est transmis dans un module vidéo 605 qui permet, le cas échéant, de modifier certains paramètres du flux vidéo tels que, par exemple, la résolution des images. Le flux vidéo issu du module vidéo 605, appelé flux vidéo de fond d'image, est transmis à un premier module, référencé 610, de mixage et de correction.

Simultanément, un module 620 de génération graphique de la symbologie génère un flux vidéo contenant les informations à afficher. Les informations contenues dans ce flux vidéo sont celles qui ont été sélectionnées par le pilote. Le flux vidéo issu du module 620, appelé flux vidéo de symbologie, est transmis à un second module, référencé 615, de mixage et de correction.

Outre le flux vidéo de fond d'image issu du module 605, le module 610 reçoit également des paramètres de correction du flux vidéo de fond d'image et le flux vidéo de symbologie. Comme suggéré par la figure 6, le flux vidéo de symbologie reçue par le module 610 transite par le module 615. Les paramètres de correction du flux vidéo de fond d'image sont adaptés à modifier le flux vidéo de fond d'image selon les caractéristiques du HUD auquel appartient le module 540.

A partir du flux vidéo de fond d'image et du flux vidéo de symbologie, le module 610 génère un flux vidéo non corrigé qui est transmis aux autres calculateurs (HUDC) et, éventuellement, à d'autres dispositifs tels qu'un écran tête basse (sortie vidéo). Le flux vidéo non corrigé est obtenu par une combinaison linéaire, pixel à pixel, des flux vidéo de fond d'image et de symbologie. Les coefficients de la combinaison linéaire permettent notamment d'ajuster la contribution de chacun des flux vidéo pour favoriser la compréhension des informations contenues dans le flux vidéo résultant.

Parallèlement, le module 610 modifie le flux vidéo de fond d'image reçu du module 605 selon les paramètres de correction du flux vidéo de fond d'image reçus. Ce flux vidéo modifié de fond d'image est transmis au second module 615 de mixage et de correction.

Outre le flux vidéo modifié de fond d'image reçu du module 610 et du flux vidéo de symbologie reçu du module 620, le module 615 reçoit également des paramètres de correction vidéo du flux vidéo de symbologie adaptés à modifier le flux vidéo de symbologie selon les caractéristiques du HUD auquel appartient le module 540. Le module 615 modifie le flux vidéo de symbologie selon ces paramètres pour former un flux vidéo modifié de symbologie qui est combiné linéairement, pixel à pixel, au flux vidéo modifié de fond d'image pour former un flux vidéo modifié qui est transmis au HPU associé au module 540 pour être affiché.

Les paramètres de correction des flux vidéo de fond d'image et de symbologie ainsi que les informations nécessaires à la génération du flux vidéo de symbologie sont reçus d'un module de traitement du calculateur auquel appartient le module 540.

Ainsi, dans un aéronef comprenant deux HUD, les images venant du HUDC opposé sont acquises sous forme de flux vidéo, comme un flux vidéo externe. Ce flux vidéo peut être ensuite mixé, ou non, avec les images contenant les informations sélectionnées générées localement.

Selon un mode de réalisation particulier, lorsque le pilote active la fonction de surveillance croisée, les images reçues d'un autre calculateur sont corrigées pour compenser la distorsion puis mixées avec un ensemble vide d'informations à afficher, c'est-à-dire une symbologie vide, afin de n'obtenir que l'affichage de la symbologie issue d'un autre calculateur. Cette image résultante est ensuite transmise sur fibre optique au projecteur. Ainsi, plusieurs symbologies ne sont pas affichées simultanément.

Pour réaliser la surveillance croisée, il est nécessaire de fournir au pilote un moyen d'activer cette fonction temporairement. Comme indiqué précédemment, elle n'est utilisée par le pilote qu'en cas de doute sur la validité ou la valeur d'un paramètre affiché. Elle ne doit pas pouvoir être activée de façon continue. La commande de surveillance croisée peut donc être activée à l'aide d'un contrôle monostable activable uniquement sur appui, c'est-à-dire qu'il est nécessaire de maintenir enfoncé afin d'accéder à la fonction. Selon un mode de réalisation particulier, ce bouton de contrôle est situé sur le panneau de contrôle situé à l'extrémité de l'auvent de chaque HUD, comme illustré sur la figure 7 où la référence 700 désigne le bouton de contrôle.

Lorsque la fonction de surveillance croisée est activée, les données relatives à un seul ensemble de senseurs sont affichées sur les deux côtés du cockpit. Une indication correspondante est alors avantageusement présentée sur les HUDs pour en avertir les pilotes.

Par conséquent, lorsque le pilote situé à gauche active la fonction de surveillance croisée, un message du type « BOTH ON RIGHT » est superposé au flux vidéo et affiché sur les deux HUDs afin de prévenir les pilotes qu'ils regardent tous les deux des informations en provenance du calculateur de droite. De la même façon, lorsque le pilote situé à droite active la fonction de surveillance croisée, un message du type « BOTH ON LEFT » est superposé au flux vidéo et affiché sur les deux HUDs.

Par ailleurs, il convient de noter qu'il peut se poser des problèmes de synchronisation des flux vidéo. En effet, afin de pouvoir afficher un flux vidéo externe, il est nécessaire d'être synchronisé sur une entrée de synchronisation externe et indépendante. Ainsi, si un premier HUD se synchronise sur un flux vidéo issu d'un second HUD, et réciproquement, la synchronisation peut être impossible à réaliser lorsque la fonction de surveillance croisée est activée. Pour résoudre ce problème, une source externe, commune et indépendante, telle que le flux vidéo EVS, peut être utilisée.

Pour pallier au problème potentiel de synchronisation et de latence associée, une indication particulière est de préférence ajoutée. Lorsque le pilote active la fonction de surveillance croisée, le flux vidéo issu d'un autre calculateur est affiché s'il est immédiatement disponible. Si, après un premier délai prédéterminé, par exemple un délai de 200 ms, l'image n'est pas disponible, un message du type « PLEASE WAIT » est avantageusement affiché sur le HUD concerné afin de donner un compte rendu d'action au pilote. Si, après un second délai prédéterminé, par exemple un délai de 3s, l'image n'est toujours pas disponible alors un message du type « X-CHECK NOT AVAILABLE » est affiché sur le HUD concerné.

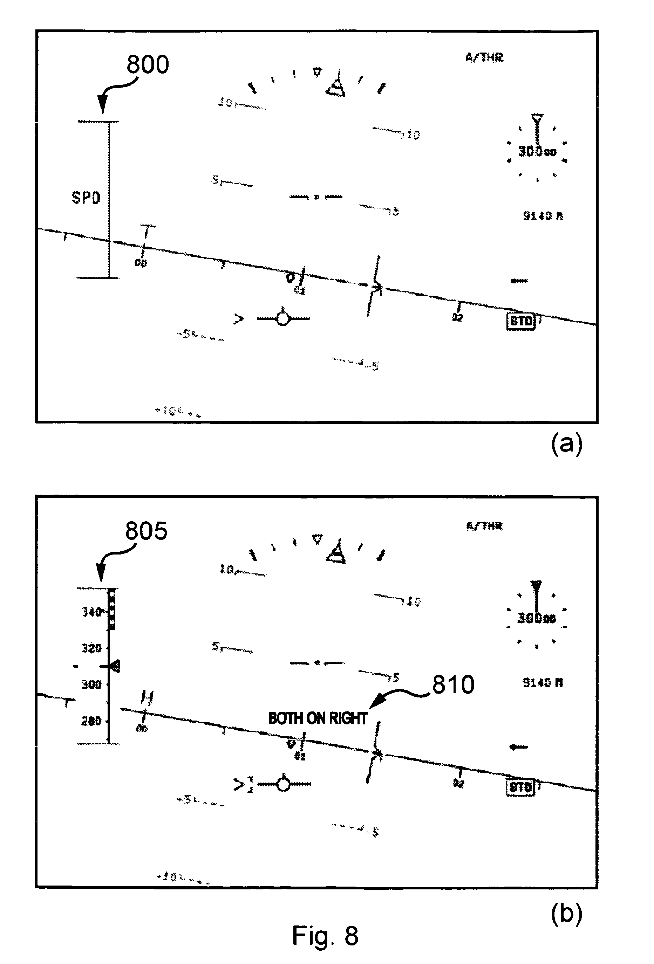

La figure 8, comprenant les figures 8a et 8b, illustre un exemple d'utilisation de la fonction de surveillance croisée. La figure 8a représente l'affichage du HUD d'un premier pilote en mode normal tandis que la figure 8b représente l'affichage du HUD du même pilote lorsque la fonction de surveillance croisée est activée.

Comme illustré sur la figure 8a par la référence 800, les informations relatives à vitesse indiquent un problème de validité de celles-ci.

Pour contrôler la vitesse affichée sur le HUD opposé, le premier pilote active la fonction de surveillance croisée en appuyant sur le bouton de contrôle dédié à cet usage.

Comme illustré sur la figure 8b, en particulier avec la référence 805, la symbologie issue du côté opposé est affichée sur le HUD du premier pilote avec le message « BOTH ON RIGHT » (référence 810).

Lorsque le premier pilote libère le bouton de contrôle d'activation de la surveillance croisée, son HUD affiche à nouveau les informations présentées sur la figure 8a.

Naturellement, pour satisfaire des besoins spécifiques, une personne compétente dans le domaine de l'invention pourra appliquer des modifications dans la description précédente.

## Revendications

1. Dispositif de surveillance croisée pour un afficheur (400-1, 500-1), appelé premier afficheur, d'un système d'affichage pour aéronef comprenant ledit premier afficheur et un second afficheur (400-2, 500-2), distinct dudit premier afficheur, chacun desdits premier et second afficheurs étant de type tête haute et comprenant des moyens pour générer une image à partir d'au moins une donnée et pour afficher ladite image générée, ce dispositif étant **caractérisé en ce qu'**il comprend les moyens suivants, moyens pour transmettre au dit premier afficher la dite image générée dans le dit second afficheur;
- moyens pour recevoir dudit second afficheur ladite image générée dans ledit second afficheur, appelée seconde image, ladite image générée dans ledit premier afficheur, étant appelée première image ; et,
- moyens pour sélectionner l'une desdites première et une seconde images, ladite image sélectionnée pouvant être affichée par ledit premier afficheur.

2. Dispositif selon la revendication 1 comprenant en outre des moyens (440-1, 545-1) pour modifier ladite première image selon les caractéristiques dudit premier afficheur.

3. Dispositif selon la revendication 1 ou la revendication 2 comprenant en outre des moyens pour transmettre ladite première image audit second afficheur ainsi que des moyens pour recevoir du dit premier afficheur la dite première image.

4. Dispositif selon la revendication 3 comprenant en outre des moyens (445-1) pour modifier ladite première image selon les caractéristiques dudit second afficheur.

5. Dispositif selon la revendication 4 comprenant en outre des moyens pour recevoir lesdites caractéristiques dudit second afficheur.

6. Dispositif selon la revendication 1 ou la revendication 2 comprenant en outre des moyens (545-1) pour modifier ladite seconde image selon les caractéristiques dudit premier afficheur.

7. Dispositif selon l'une quelconque des revendications précédentes comprenant en outre les moyens suivants,
- moyens pour recevoir au moins une image d'une source extérieure, appelée troisième image ; et,
- moyens pour combiner lesdites première et troisième images.

8. Dispositif selon l'une quelconque des revendications précédentes comprenant en outre des moyens pour recevoir un signal de synchronisation externe indépendant.

9. Dispositif selon l'une quelconque des revendications précédentes comprenant en outre des moyens pour insérer dans ladite seconde image une indication selon laquelle ladite seconde image est issue dudit second afficheur.

10. Aéronef comprenant le dispositif selon l'une quelconque des revendications précédentes.

## Patentansprüche

1. Vorrichtung zur Überkreuzüberwachung für eine Anzeige (400-1, 500-1), erste Anzeige genannt, eines Anzeigesystems für ein Luftfahrzeug, das die erste Anzeige und eine von der ersten Anzeige getrennte zweite Anzeige (400-2, 500-2) umfasst, wobei eine jede der ersten und zweiten Anzeigen vom Typ Head-up ist und Mittel umfasst, um aus wenigstens einem Datenmaterial ein Bild zu generieren und um das generierte Bild anzuzeigen, wobei diese Vorrichtung **dadurch gekennzeichnet ist, dass** sie die folgenden Mittel umfasst,
- Mittel zum Übertragen des in der zweiten Anzeige generierten Bildes an die erste Anzeige,
- Mittel zum Empfangen des in der zweiten Anzeige generierten Bildes, zweites Bild genannt, von der zweiten Anzeige, wobei das in der ersten Anzeige generierte Bild als erstes Bild bezeichnet wird, und
- Mittel zum Auswählen von einem der ersten und zweiten Bilder, wobei das ausgewählte Bild durch die erste Anzeige angezeigt werden kann.

2. Vorrichtung nach Anspruch 1, ferner umfassend Mittel (440-1, 545-1) zum Verändern des ersten Bildes entsprechend den Merkmalen der ersten Anzeige.

3. Vorrichtung nach Anspruch 1 oder Anspruch 2, ferner umfassend Mittel zum Übertragen des ersten Bildes an die zweite Anzeige sowie Mittel zum Empfangen des ersten Bildes von der ersten Anzeige.

4. Vorrichtung nach Anspruch 3, ferner umfassend Mittel (445-1) zum Verändern des ersten Bildes entsprechend den Merkmalen der zweiten Anzeige.

5. Vorrichtung nach Anspruch 4, ferner umfassend Mittel zum Empfangen der Merkmale der zweiten Anzeige.

6. Vorrichtung nach Anspruch 1 oder Anspruch 2, ferner umfassend Mittel (545-1) zum Verändern des zweiten Bildes entsprechend den Merkmalen der ersten Anzeige.

7. Vorrichtung nach einem der vorhergehenden Ansprüche, ferner umfassend die folgenden Mittel,
- Mittel zum Empfangen wenigstens eines Bildes von einer äußeren Quelle, drittes Bild genannt, und
- Mittel zum Kombinieren des ersten und des dritten Bildes.

8. Vorrichtung nach einem der vorhergehenden Ansprüche, ferner umfassend Mittel zum Empfangen eines unabhängigen externen Synchronisationssignals.

9. Vorrichtung nach einem der vorhergehenden Ansprüche, ferner umfassend Mittel zum Einfügen in das zweite Bild einer Angabe, wonach das zweite Bild aus der zweiten Anzeige stammt.

10. Luftfahrzeug, umfassend die Vorrichtung nach einem der vorhergehenden Ansprüche.

## Claims

1. A crossed monitoring device for a display unit (400-1, 500-1), referred to as first display unit, of a display system for an aircraft comprising the said first display unit and a second display unit (400-2, 500-2), separate from the said first display unit, each of the said first and second display units being of the head-up type and comprising means for generating an image from at least one datum and for displaying the said generated image, this device being **characterized in that** it comprises the following means,
- means for transmitting to the said first display unit the said image generated in the said second display unit ;
- means for receiving from the said second display unit, the said image, referred to as the second image, generated in the said second display unit, the said image generated in the said first display unit being referred to as the first image; and
- means for selecting one of the said first and second images, the said selected image being capable of being displayed by the said first display unit.

2. A device according to claim 1, additionally comprising means (440-1, 545-1) for modifying the said first image according to the characteristics of the said first display unit.

3. A device according to claim 1 or claim 2, additionally comprising means for transmitting the said first image to the said second display unit, as well as means for receiving the said first image from the said first display unit.

4. A device according to claim 3, additionally comprising means (445-1) for modifying the said first image according to the characteristics of the said second display unit.

5. A device according to claim 4, additionally comprising means for receiving the said characteristics of the said second display unit.

6. A device according to claim 1 or claim 2, additionally comprising means (545-1) for modifying the said second image according to the characteristics of the said first display unit.

7. A device according to any one of the preceding claims, additionally comprising the following means,
- means for receiving at least one image, referred to as third image, from an external source; and
- means for combining the said first and third images.

8. A device according to any one of the preceding claims, additionally comprising means for receiving an independent external synchronization signal.

9. A device according to any one of the preceding claims, additionally comprising means for inserting, in the said second image, an indication that the said second image originates from the said second display unit.

10. An aircraft comprising the device according to any one of the preceding claims.
